# FASCICULE DE BREVET EUROPEEN

(11) **EP 3 476 718 B1**
(45) Date de publication et mention de la délivrance du brevet: **22.04.2020**
(21) Numéro de dépôt: 18181902.0
(22) Date de dépôt: 05.07.2018
(51) Int. Cl.: B64C 1/32, B64C 1/14

(54) **HUBLOT LARGABLE DE VEHICULE ET VEHICULE COMPRENANT UN TEL HUBLOT**
ABWERFBARES FAHRZEUGFENSTER UND FAHRZEUG MIT EINEM SOLCHEN FENSTER
JETTISONABLE VEHICLE WINDOW AND VEHICLE COMPRISING SUCH WINDOW

(30) Priorité: 27.10.2017 FR 1771133
(43) Date de publication de la demande: 01.05.2019
(73) Titulaire: Airbus Helicopters, 13725 Marignane Cedex (FR)
(72) Inventeur: MAUGER, Fabien, 13310 Saint Martin de Crau (FR); TESTA, Sébastien, 86695 Nordendorf (DE)
(74) Mandataire: GPI & Associés

(56) Documents cités:
- EP-A2- 2 944 562
- FR-A1- 2 973 428

## Description

La présente invention concerne un hublot largable de véhicule et un véhicule muni de ce hublot largable.

Divers types de véhicules sont concernés par l'invention, notamment des automobiles, des navires, des véhicules de l'industrie aéronautique. Par exemple, l'invention peut s'appliquer à des aéronefs, notamment à voilure tournante. Sans limitation, l'invention peut s'appliquer à un hélicoptère. Dans un autre exemple, l'aéronef à voilure tournante peut être un drone.

Un véhicule peut comporter une structure porteuse munie d'un hublot. Un tel hublot peut comprendre une paroi transparente au moins pour des ondes électromagnétiques ayant une fréquence comprise dans la gamme de fréquences visibles par un humain. Par exemple, une porte ou une cloison latérale d'un aéronef peut comporter un tel hublot.

Le hublot peut en outre être largable pour permettre à un passager de sortir de ce véhicule en cas d'incident.

Un hublot largable est fixé à un encadrement de la cellule du véhicule dans des conditions normales de fonctionnement du véhicule. Par contre et en cas d'urgence, le hublot largable peut être désolidarisé de la cellule pour libérer une ouverture dans cette cellule afin de générer un accès entre l'intérieur et l'extérieur du véhicule.

Dès lors, le véhicule comporte un dispositif de fixation étanche permettant d'une part de fixer le hublot largable à l'encadrement de la cellule et, d'autre part, de larguer le hublot largable en cas d'urgence. Un tel dispositif de fixation étanche peut comprendre un joint de largage à clé de largage. Un tel joint de largage à clé de largage peut comporter un corps de joint et au moins une clé de largage pouvant être extraite d'un logement du corps de joint pour permettre une déformation de ce corps de joint.

Le document FR 2973428 décrit un joint de largage à deux clés de largage. Ce joint de largage comprend un corps de joint. Ce corps de joint possède un tronc central portant deux ailes de confinement intérieur et deux ailes de confinement extérieur. Une première aile de confinement intérieur et une première aile de confinement extérieur définissent entre elles une gorge interne dans laquelle est agencé le pourtour du hublot largable. Une deuxième aile de confinement intérieur et une deuxième aile de confinement extérieur définissent entre elles une gorge externe dans laquelle est agencé le pourtour de l'encadrement.

En outre, la première aile de confinement intérieur et la deuxième aile de confinement intérieur délimitent entre elles un logement d'insertion intérieur et présentent chacune une arête d'agrafage élastique en saillie vers le logement d'insertion intérieur. De même, la première aile de confinement extérieur et la deuxième aile de confinement extérieur délimitent entre elles un logement d'insertion extérieur et présentent chacune une arête d'agrafage élastique en saillie vers le logement d'insertion extérieur.

Dès lors, le joint de largage présente une première clé de largage et une deuxième clé de largage amovibles. La première clé a la forme d'un ruban remplissant le logement d'insertion intérieur lorsque le hublot largable est porté par l'encadrement de la cellule d'un véhicule. La deuxième clé a la forme d'un ruban remplissant le logement d'insertion extérieur lorsque le hublot largable est porté par l'encadrement de la cellule d'un véhicule. La première clé de largage et la deuxième clé de largage comprennent chacune une sangle solidaire du ruban associé.

Pour fixer le hublot largable à l'encadrement, un opérateur place alors le hublot largable dans la gorge interne et l'encadrement dans la gorge externe. Ensuite, l'opérateur positionne la première clé dans le logement d'insertion intérieur et la deuxième clé dans le logement d'insertion extérieur. La première clé de largage et la deuxième clé de largage empêchent alors la déformation du joint de largage et permettent de maintenir le hublot largable solidaire de l'encadrement.

Pour larguer le hublot largable, un passager présent dans le véhicule tire sur la sangle de la première clé de largage pour sortir cette première clé de largage du logement d'insertion intérieur.

Dès lors, ce passager pousse sur le hublot pour déformer le corps de joint en engendrant une rotation de la deuxième aile de confinement intérieur afin de désengager la gorge externe de l'encadrement.

Bien qu'efficace, un tel joint de largage peut nécessiter un effort important pour pousser le hublot afin de le larguer.

En particulier, le hublot et le joint de largage sont notamment dimensionnés en fonction des contraintes aérodynamiques et des vibrations subies par un aéronef en vol. Le corps de joint et les ailes de confinement peuvent être réalisés à l'aide d'un élastomère présentant une raideur relativement élevée. Bien qu'efficace pour maintenir le hublot en vol, cette stratégie rend de fait plus difficile la déformation du joint de largage lorsqu'un largage est requis.

Un passager peut alors éprouver des difficultés à larguer le hublot en raison de l'effort à fournir dans une situation d'urgence émotionnellement compliquée.

Le document EP 2.944.562 est éloigné de l'invention en ayant trait à une porte pliable.

Le document EP 1.500.537 décrit une paroi de fenêtre de véhicule ayant une vitre intérieure et une vitre extérieure. La vitre intérieure et la vitre extérieure sont superposées l'une sur l'autre et sont présentes dans deux plans différents. La vitre extérieure est collée à la carrosserie d'une automobile. La vitre intérieure est de taille réduite dans un coin par rapport à la vitre extérieure pour qu'un dispositif puisse exercer un effort uniquement sur la vitre extérieure.

Le document US 6.164.715 décrit une paroi vitrée tenue par un joint à double clés expansibles et démontables.

Le document FR 1.146.364 suggère la découpe d'une partie de la peau d'un avion avec un câble.

La présente invention a dans ce contexte pour objet un hublot largable tendant à minimiser les efforts à fournir par un humain pour être largué d'un véhicule.

L'invention concerne alors un hublot largable muni d'une paroi périphérique sur tout un pourtour de ce hublot, la paroi périphérique étant destinée à être insérée dans un joint.

Le pourtour de la paroi périphérique représente alors le pourtour du hublot inséré dans le joint.

De plus, la paroi périphérique comprend au moins un premier tronçon et un deuxième tronçon qui sont situés dans le prolongement l'un de l'autre en dehors d'une phase de largage, le premier tronçon présentant un premier flanc séparé en dehors de la phase de largage d'un deuxième flanc du deuxième tronçon par un espace le long d'une ligne de séparation, le premier tronçon s'étendant en épaisseur d'une première face interne destinée à être en regard d'une cabine d'un véhicule vers une première face externe destinée à être en regard d'un milieu extérieur situé à l'extérieur du véhicule, le deuxième tronçon s'étendant en épaisseur d'une deuxième face interne destinée à être en regard de ladite cabine vers une deuxième face externe destinée à être en regard dudit milieu extérieur, un film de colle étant disposé dans l'espace en étant collé au premier flanc et au deuxième flanc. Le hublot comprend une bande de liaison qui est fixée, par exemple collée ou vissé, à la première face interne et à la deuxième face interne en recouvrant ledit espace pour autoriser une rotation du premier tronçon par rapport au deuxième tronçon lors d'une dite phase de largage en déformant le film de colle.

Par rapport à une paroi périphérique classique, la paroi périphérique de l'invention peut présenter au moins un trait de coupe pour obtenir le premier tronçon et le deuxième tronçon. Le premier flanc du premier tronçon est alors collé au deuxième flanc du deuxième tronçon. Le film de colle permet de lier le premier tronçon et le deuxième tronçon et de rendre étanche la liaison entre le premier tronçon et le deuxième tronçon au niveau dudit espace.

Dès lors, le premier tronçon est dans le prolongement du deuxième tronçon, contrairement à un état de l'art consistant à superposer deux vitres.

De plus, une bande de liaison recouvre cette liaison en étant accolée à la fois au premier tronçon et au deuxième tronçon. Cette bande de liaison permet d'une part de fixer le deuxième tronçon au premier tronçon, et d'autre part de faire office de charnière.

Pour larguer le hublot, un individu peut alors pousser sur le premier tronçon pour rompre ou étirer le film de colle. Le deuxième tronçon effectue alors une rotation par rapport au premier tronçon pour permettre d'extraire le hublot en exerçant un effort mesuré.

L'invention permet donc de déformer le hublot lors de son largage tout en conservant les fonctions originelles du hublot, à savoir une fonction de résistance aux efforts notamment aérodynamiques d'un giravion par exemple en vol ainsi qu'une fonction d'isolation et une fonction d'étanchéité.

En raison des efforts subis par un hublot notamment sur un aéronef et un giravion, l'introduction d'une ligne de coupure dans la paroi périphérique peut paraitre contraire à la logique. Néanmoins, le film de colle et la bande de liaison peuvent permettre de maintenir le hublot en place en dehors de la phase de largage, et facilitent l'extraction de ce hublot durant une phase de largage.

En outre, ce système ne tend pas à dégrader la vitre, contrairement à certains dispositifs engendrant la casse d'une vitre et de fait des risques de création de débris potentiellement dangereux. En effet, l'espace présent entre le premier tronçon et le deuxième tronçon représente une prédécoupe qui peut permettre de ne pas générer de débris.

Le hublot peut de plus comporter une ou plusieurs des caractéristiques qui suivent

Selon un aspect, la paroi périphérique peut être transparente aux ondes électromagnétiques qui présentent une fréquence comprise dans la gamme des fréquences visibles par l'homme.

Le premier tronçon et le deuxième tronçon sont ainsi transparents à de telles ondes électromagnétiques.

Selon un aspect, le premier tronçon et le deuxième tronçon sont par exemple réalisés à partir de poly(méthacrylate de méthyle)(ECS2269C).

La bande de liaison peut comprendre une bande en matériaux composites, et peut comprendre au moins une bande de fibres de verre (ECS0037). La bande de liaison peut être collée à la première face interne et à la deuxième face interne par une bande de colle. Par exemple, la bande de colle comporte successivement selon la ligne de séparation un premier tronçon d'extrémité destiné à être inséré dans la gorge interne du joint de largage, puis un tronçon central situé en dehors du joint de largage, puis un deuxième tronçon d'extrémité destiné à être inséré dans la gorge interne du joint de largage. Cette bande de colle présente une épaisseur selon une direction sensiblement orthogonale à la première face interne et à la deuxième face interne. Dès lors, le premier tronçon d'extrémité et le deuxième tronçon d'extrémité peuvent avoir des épaisseurs de l'ordre du millimètre inférieures à l'épaisseur du tronçon central, par exemple de l'ordre de trois millimètres.

La bande de colle est par exemple du type connu sous la dénomination BETAMATE (ECS2028.30).

En outre, le film de colle disposé entre les flancs du premier tronçon et du deuxième tronçon peut comprendre une colle pâteuse, par exemple du BETAMATE (ECS2028.30). Eventuellement, le film de colle présente une épaisseur entre le premier flanc et le deuxième flanc d'au moins un millimètre.

Selon un aspect, la ligne de séparation est une droite.

Cette ligne de séparation est en outre par exemple parallèle au premier flanc et au deuxième flanc.

Selon un aspect, la première face interne peut couvrir une surface très supérieure à une surface de la deuxième face interne. Par exemple, la première face interne peut couvrir une surface au moins dix fois supérieure à une surface de la deuxième face interne.

Selon un aspect, le premier tronçon peut présenter une marque indiquant où exercer un effort de poussée pour larguer le hublot.

Cette marque peut apparaître par exemple sur la première face interne.

Cette marque représente un point de poussée idéal pour faire sortir le hublot d'un encadrement. Cette marque peut être située un peu au-dessus de la ligne de séparation entre le centre de gravité du hublot et le deuxième tronçon.

Selon un aspect, en dehors d'une phase de largage, le deuxième tronçon peut prolonger le premier tronçon selon un sens allant d'un centre de gravité du hublot vers ledit pourtour.

Selon un aspect, la paroi périphérique peut comporter uniquement un premier tronçon et un deuxième tronçon.

Selon un aspect, le deuxième tronçon peut comporter un coin du pourtour.

Le deuxième tronçon possède alors des dimensions restreintes et peut être localisé dans un coin. La bande de liaison est ainsi relativement discrète.

Par exemple, ce coin relie deux segments de pourtour appartenant au pourtour, la bande de liaison s'étendant entre les deux segments de pourtour.

Selon un aspect, le hublot peut présenter un segment transversal qui s'étend selon une longueur du centre de gravité du hublot jusqu'à un point extrémal du deuxième tronçon, ledit point extrémal du deuxième tronçon étant le point du deuxième tronçon le plus éloigné dudit centre de gravité, ledit espace étant situé à une distance du point extrémal, ladite distance étant comprise entre 6% et 30% de ladite longueur.

Ces bornes de 6% et 30% sont données avec une précision de 1 % de ladite longueur.

Une telle distance permet de minimiser l'effort à fournir pour extraire le hublot tout en limitant l'impact visuel de la bande de liaison et en préservant la résistance du hublot en vol pour notamment éviter son arrachement en vol de la cellule d'un aéronef.

La ligne de séparation peut être sensiblement perpendiculaire à ce segment transversal.

Un tel segment transversal peut s'étendre selon une bissectrice d'un angle reliant les deux segments de pourtour d'un coin. Dans le cadre d'un hublot rectangulaire, un tel segment transversal peut s'étendre selon une diagonale du hublot.

Selon un aspect, ladite distance est égale à 8% de ladite longueur.

Selon un aspect, le hublot peut être sensiblement rectangulaire, voire rectangulaire, ledit hublot présentant quatre segments et quatre coins. Ces coins sont éventuellement arrondis. Dès lors, un des coins comporte le deuxième tronçon.

Cette forme sensiblement rectangulaire découle de la dimension type IV de la règlementation aéronautique CS29.

Outre un hublot, l'invention vise un véhicule muni d'un encadrement autour d'une ouverture, ladite ouverture étant disposée entre une cabine et un milieu extérieur situé à l'extérieur dudit véhicule, ledit véhicule comprenant un hublot pour obturer ladite ouverture, ledit véhicule comprenant un joint de largage à clé de largage qui comprend un corps de joint, le corps de joint présentant une gorge interne et une gorge externe, ladite paroi périphérique étant engagée dans ladite gorge interne, ledit encadrement étant engagé dans ladite gorge externe,

Le hublot est selon l'invention, le premier tronçon et le deuxième tronçon étant insérés dans ladite gorge interne.

Le premier tronçon et le deuxième tronçon remplissent chacun ladite gorge interne dans des zones différentes. Dès lors, une zone de la gorge interne est uniquement remplie par le premier tronçon et une autre zone est uniquement remplie par le deuxième tronçon.

Ce véhicule peut être un aéronef, et notamment un giravion, voire un hélicoptère.

Selon un aspect, le véhicule peut comprendre une poignée, ladite poignée s'étendant d'une première extrémité solidaire d'une première zone d'une clé de largage jusqu'à une deuxième extrémité solidaire d'une deuxième zone de la clé de largage, ladite poignée étant située au droit de ladite bande de liaison pour masquer visuellement cette bande de liaison aux yeux d'un individu présent dans la cabine.

La poignée peut être positionnée en face de la bande de liaison pour minimiser la surface occultée du hublot et pour masquer la bande de liaison.

Selon un aspect, ledit premier tronçon présentant une marque indiquant où pousser pour larguer le hublot, ladite poignée est située au droit de ladite marque pour masquer visuellement ladite marque aux yeux d'un individu présent dans la cabine.

La poignée peut aussi cacher le point de poussée pour rendre plus évident l'ordre des opérations à réaliser pour larguer le hublot.

L'invention vise aussi un procédé de largage d'un hublot dans un tel véhicule. Ce procédé comporte les étapes de :
- retrait d'une clé de largage dudit joint de largage,
- application d'un effort sur le premier tronçon,
- déchirure ou élongation dudit film de colle et rotation dudit deuxième tronçon par rapport au premier tronçon,
- extraction du hublot en dehors du véhicule.

Un passager peut retirer au moins une clé du joint de largage puis pousse le premier tronçon vers l'extérieur du véhicule. Le film de colle s'étire voire rompt pour permettre de plier la paroi périphérique afin de désengager le hublot de l'encadrement, et en particulier le joint en dehors de l'encadrement.

L'invention et ses avantages apparaîtront avec plus de détails dans le cadre de la description qui suit avec des exemples donnés à titre illustratif en référence aux figures annexées qui représentent :
- la figure 1, une vue d'un hublot selon l'invention à partir de l'intérieur d'un véhicule,
- la figure 2, une vue d'un joint de largage portant ledit hublot,
- la figure 3, une vue d'un hublot selon l'invention à partir de l'extérieur du véhicule,
- la figure 4, une vue coupée d'un hublot selon l'invention
- la figure 5, un schéma illustrant un hublot,
- les figures 6 et 7, des vues illustrant le fonctionnement de l'invention.

Les éléments présents dans plusieurs figures distinctes sont affectés d'une seule et même référence.

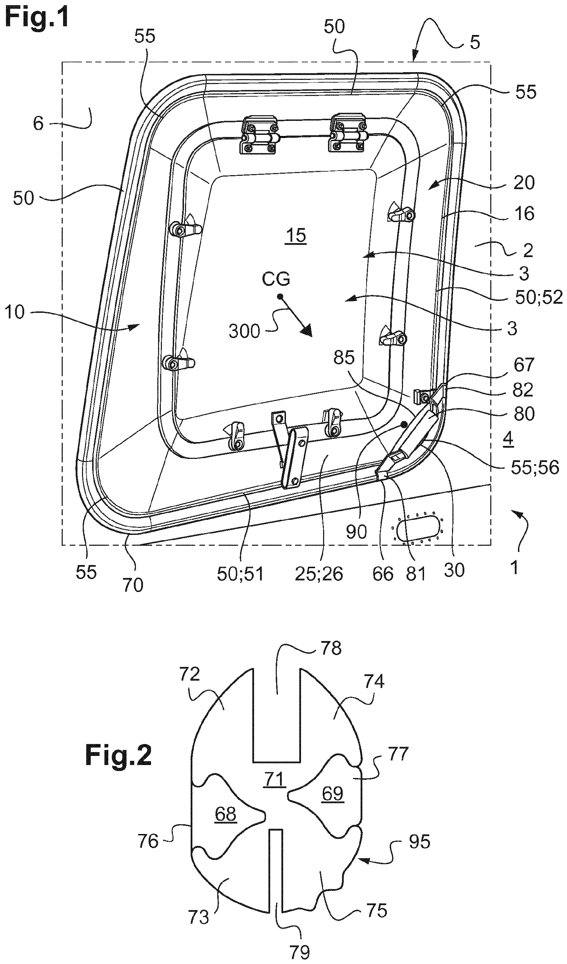

La figure 1 présente un véhicule 1 selon l'invention. Ce véhicule peut être une automobile, un navire, un aéronef. En particulier, le véhicule 1 peut être un giravion.

Le véhicule 1 comporte une cloison 6 séparant une cabine 4 du véhicule d'un milieu extérieur 5. Cette cloison 6 inclut un encadrement 2 qui entoure une ouverture 3.

Dès lors, le véhicule 1 possède un hublot 10 qui obture l'ouverture 3 dans des conditions normales. Ce hublot est néanmoins un hublot pouvant être largué dans une situation d'urgence pour permettre à un individu présent dans la cabine de s'extraire hors du véhicule en traversant l'ouverture 3.

Par conséquent, le hublot 10 est fixé à l'encadrement 3 par un joint de largage 70 à clé de largage.

La figure 2 illustre un tel joint de largage 70.

Ce joint de largage est muni d'un corps de joint 95.

Le corps de joint 95 comprend un tronc central 71. Le tronc central est solidaire d'une première aile de confinement intérieur 72 et d'une première aile de confinement extérieur 74 qui définissent entre elles une gorge interne 78. De plus, Le tronc central est solidaire d'une deuxième aile de confinement intérieur 73 et d'une deuxième aile de confinement extérieur 75 qui définissent entre elles une gorge externe 79. La gorge interne 78 et la gorge externe 79 peuvent être sensiblement dans un même plan.

De plus, la première aile de confinement intérieur 72 et la deuxième aile de confinement intérieur 73 délimitent conjointement un logement d'insertion intérieur 68, ayant par exemple une section sensiblement en forme d'un symbole du trèfle. De même, la première aile de confinement extérieur 74 et la deuxième aile de confinement extérieur 75 délimitent conjointement un logement d'insertion extérieur 69, ayant par exemple une section sensiblement en forme d'un symbole du trèfle.

Chaque aile de confinement 72, 73, 74, 75 peut en outre présenter une arête d'agrafage élastique en saillie vers le logement d'insertion correspondant.

Le joint de largage présente en outre une première clé de largage 76 et une deuxième clé de largage 77 amovibles en forme de rubans fermés. La première clé de largage 76 et la deuxième clé de largage 77 sont conformées à la forme respectivement du logement d'insertion intérieur et du logement d'insertion extérieur lorsque le hublot largable est porté par l'encadrement de la cellule d'un véhicule. La première clé de largage 76 et la deuxième clé de largage 77 comprennent chacune une poignée solidaire du ruban associé.

Eventuellement, le joint de largage peut comporter une unique clé de largage. Par exemple, le joint de largage ne comprend que la première clé de largage. Dès lors, le joint de largage ne comprend pas un logement d'insertion extérieur, la et la deuxième aile de confinement extérieur et la deuxième et la deuxième aile de confinement intérieur formant une seule et même aile.

Dès lors et en référence à la figure 1, le hublot 10 présente un pourtour 16 engagé dans la gorge interne du corps de joint du joint de largage. L'encadrement 2 présente un pourtour engagé dans la gorge externe du corps de joint du joint de largage.

Eventuellement, le pourtour 16 est collé au moins localement au joint de largage.

Eventuellement, l'encadrement 2 n'est pas collé au joint de largage, en étant juste coincé dans la gorge externe.

Plus particulièrement, le hublot présente une paroi périphérique 20. Cette paroi périphérique peut couvrir l'intégralité du hublot 10, ou peut selon l'exemple représenté entourer une fenêtre 15.

Cette paroi périphérique 20 peut être transparente aux ondes électromagnétiques qui présentent une fréquence comprise dans la gamme des fréquences visibles par l'homme.

En outre, la paroi périphérique 20 comprend non pas un unique élément mais au moins deux éléments. Ainsi, la paroi périphérique 20 possède au moins un premier tronçon 25 et un deuxième tronçon 30, voire uniquement ce premier tronçon 25 et ce deuxième tronçon 30.

Le premier tronçon 25 et un deuxième tronçon 30 sont situés dans le prolongement l'un de l'autre, du moins en dehors d'une phase de largage. Par suite, le deuxième tronçon 30 prolonge le premier tronçon 25 selon par exemple un sens 300 allant du centre de gravité CG du hublot vers le pourtour 16.

Le premier tronçon 25 et le deuxième tronçon 30 ne sont pas superposés l'un sur l'autre. Au contraire, ce premier tronçon 25 et ce deuxième tronçon 30 sont éventuellement sensiblement coplanaires.

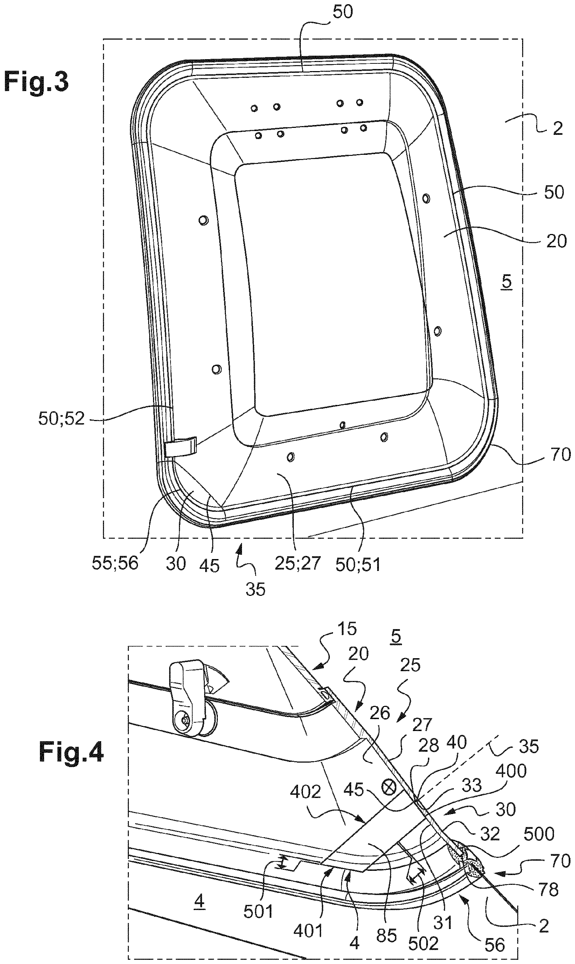

La figure 3 présente une vue du hublot vu du milieu extérieur et montre clairement le premier tronçon 25 et le deuxième tronçon 30.

La figure 4 présente une coupe locale du hublot 10.

Cette coupe fait apparaître que le premier tronçon 25 s'étend selon son épaisseur d'une première face interne 26 en regard de la cabine 4 vers une première face externe 27 en regard du milieu extérieur 5. Par suite, l'épaisseur du premier tronçon est à mesurer entre la première face interne 26 et la première face externe 27. En outre, le premier tronçon 25 présente un premier pourtour comprenant un tronçon à engager dans le joint de largage 70 et un premier flanc 28 à coller au deuxième tronçon.

Eventuellement, la première face externe 27 est uniquement collée à une paroi 500 de la première aile de confinement extérieur 74 délimitant la gorge interne du joint de largage, par exemple en dehors des coins 56.

De même, le deuxième tronçon 30 s'étend selon son épaisseur d'une deuxième face interne 31 en regard de la cabine 4 vers une deuxième face externe 32 en regard du milieu extérieur 5. La première face interne 26 et la deuxième face interne 31 peuvent être sensiblement coplanaires. De même la première face externe 27 et la deuxième face externe 32 peuvent être sensiblement coplanaires.

De plus, le deuxième tronçon 30 présente un deuxième pourtour comprenant un tronçon à engager dans le joint de largage 70 et un deuxième flanc 33 à coller au premier flanc 28.

Eventuellement, la deuxième face externe 32 est uniquement collée à une paroi 500 de la première aile de confinement extérieur 74 délimitant la gorge interne du joint de largage.

Dès lors, la paroi périphérique comporte un espace 40 séparant le premier flanc 28 du deuxième tronçon 30 le long d'une ligne de séparation 35. Cette ligne de séparation 35 est par exemple une droite. Le premier tronçon 25 et le deuxième tronçon 30 sont par exemple obtenus en coupant une paroi selon cette ligne de séparation 35.

Dès lors, un film de colle 45 est disposé dans l'espace 40 pour être collé au premier flanc 28 et au deuxième flanc 33.

Par ailleurs, le hublot 10 est muni d'une bande de liaison 85. Cette bande de liaison recouvre l'espace 40 en étant collée par une bande de colle 400 à la première face interne 26 et à la deuxième face interne 31 de part et d'autre de cet espace.

La bande de colle 400 peut comporter successivement selon la ligne de séparation un premier tronçon d'extrémité 401 inséré dans une gorge interne 78 du joint de largage 70 puis un tronçon central 402 puis un deuxième tronçon d'extrémité inséré dans la gorge interne 78.

Le premier tronçon d'extrémité 401 et le deuxième tronçon d'extrémité peuvent présenter tous deux une première épaisseur 501 entre la bande de liaison 85 et la première face interne 26 et entre la bande de liaison 85 et la deuxième face interne 31. Le tronçon central 402 présente une deuxième épaisseur 502 supérieure à la première épaisseur entre la bande de liaison 85 et la première face interne 26 et entre la bande de liaison 85 et la deuxième face interne 31. Par exemple, la première épaisseur est de l'ordre du millimètre, la deuxième épaisseur étant de l'ordre de trois millimètres.

Cette caractéristique permet d'optimiser la liaison entre la bande de liaison et respectivement le premier tronçon et le deuxième tronçon au niveau du tronçon central, tout en permettant un bon positionnement du hublot dans la gorge interne pour minimiser les risques de fuite.

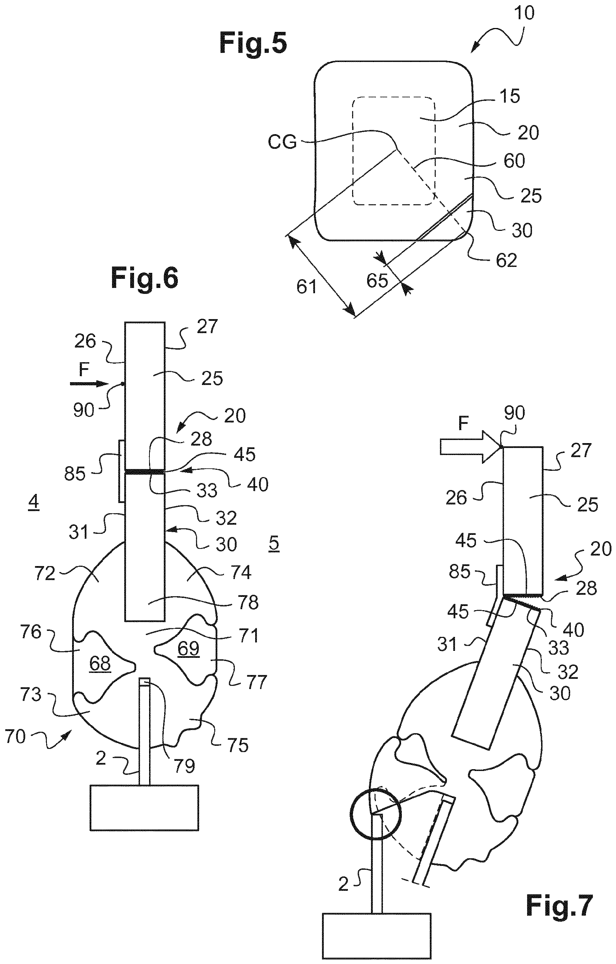

Selon un autre aspect et en référence à la figure 5, le deuxième tronçon 30 peut représenter un coin du pourtour 16 de la paroi périphérique.

Un tel coin relie deux segments de pourtour 51, 52 du pourtour 16, l'espace 40 s'étendant d'un de ces deux segments de pourtour 51 jusqu'à l'autre segment 52.

Par exemple, le hublot 10 est sensiblement rectangulaire en ayant quatre segments 50 et quatre coins 55 arrondis. Le deuxième tronçon 30 comporte alors un desdits coins 55.

Selon un autre aspect, une longueur 61 sépare le long d'un segment transversal 60 le centre de gravité CG du hublot 10 et le point extrémal 62 du deuxième tronçon 30. Ce point extrémale 62 est le point du deuxième tronçon 30 situé le plus loin du centre de gravité CG.

Eventuellement l'espace 40 est situé, par exemple en suivant ce segment transversal, à une distance 65 du point extrémal. Cette distance 65 peut être comprise entre 6% inclus et 30% inclus de la longueur 61.

Selon un exemple, la distance 65 est égale à 8% de la longueur 61.

En référence à la figure 1, le hublot peut comprendre une poignée 80 fixée à la première clé de largage du joint de largage

Cette poignée 80 peut s'étendre d'une première extrémité 81 solidaire d'une première zone 66 de la première clé de largage jusqu'à une deuxième extrémité 82 solidaire d'une deuxième zone 67 de la première clé de largage.

Eventuellement, la poignée 80 est de plus située transversalement au dessus de la bande de liaison 85 pour masquer visuellement cette bande de liaison 85 aux yeux d'un individu présent dans la cabine 4.

Selon un autre aspect, le premier tronçon 25 peut en outre présenter une marque 90 indiquant où exercer un effort de poussée pour larguer le hublot 10. Par exemple, la marque 90 peut comporter une croix apposée ou gravée dans la première face interne.

Le cas échéant, la poignée 80 peut aussi être située transversalement au dessus de ladite marque 90 pour masquer visuellement cette marque 90 aux yeux d'un individu présent dans la cabine 4.

Les figures 6 et 7 illustrent le procédé de largage d'un hublot selon la figure 1.

En référence à la figure 6, le hublot et l'encadrement sont engagés respectivement dans la gorge interne et la gorge externe du corps de joint du joint de largage.

La première clé de largage 76 et la deuxième clé de largage 77 sont de plus bloquées respectivement dans le logement d'insertion intérieur 68 et le logement d'insertion extérieur 69.

Pour larguer le hublot, un individu présent dans la cabine 4 saisit la poignée 80 pour sortir la première clé de largage 76 du logement d'insertion intérieur 68

L'individu applique alors un effort F sur le premier tronçon 25, le cas échéant sur la marque 90.

En référence à la figure 7, le film de colle 45 est alors soit déchiré soit étiré. Le deuxième tronçon peut alors effectuer une rotation par rapport au premier tronçon 25, la bande de liaison servant de charnière.

Cette rotation permet à la deuxième aile de confinement 73 de se déformer pour passer au dessus de l'encadrement. A l'inverse, selon un art antérieur lorsque la deuxième aile de confinement arrive en butée contre la première aile de confinement, cette deuxième aile de confinement peut toujours buter contre l'encadrement ce qui peut nécessiter la fourniture d'un effort très important pour sortir le hublot.

A l'issue de la manœuvre, le hublot 10 est alors extrait en dehors du véhicule 1.

## Revendications

1. Hublot (10) largable muni d'une paroi périphérique (20) sur tout un pourtour (16) de ce hublot (10), ladite paroi périphérique (20) étant destinée à être insérée dans un joint de largage (70),
**caractérisé en ce que** ladite paroi périphérique (20) comprend au moins un premier tronçon (25) et un deuxième tronçon (30) qui sont situés dans le prolongement l'un de l'autre en dehors d'une phase de largage, ledit premier tronçon (25) présentant un premier flanc (28) séparé en dehors de ladite phase de largage d'un deuxième flanc (33) du deuxième tronçon (30) par un espace (40) le long d'une ligne de séparation (35), ledit premier tronçon (25) s'étendant en épaisseur d'une première face interne (26) destinée à être en regard d'une cabine (4) d'un véhicule (1) vers une première face externe (27) destinée à être en regard d'un milieu extérieur (5) situé à l'extérieur dudit véhicule (1), ledit deuxième tronçon (30) s'étendant en épaisseur d'une deuxième face interne (31) destinée à être en regard de ladite cabine (4) vers une deuxième face externe (32) destinée à être en regard dudit milieu extérieur (5), un film de colle (45) étant disposé dans ledit espace (40) en étant collé au premier flanc (28) et au deuxième flanc (33), ledit hublot (10) comprenant une bande de liaison (85) fixée à la première face interne (26) et à la deuxième face interne (31) en recouvrant ledit espace (40) pour autoriser une rotation du premier tronçon (25) par rapport au deuxième tronçon (30) lors d'une dite phase de largage en déformant ledit film de colle (45).

2. Hublot selon la revendication 1,
**caractérisé en ce que** ladite paroi périphérique (20) est transparente aux ondes électromagnétiques qui présentent une fréquence comprise dans la gamme des fréquences visibles par l'homme.

3. Hublot selon l'une quelconque des revendications 1 à 2,
**caractérisé en ce que** ladite ligne de séparation (35) est une droite.

4. Hublot selon l'une quelconque des revendications 1 à 3,
**caractérisé en ce que** ledit premier tronçon (25) présente une marque (90) indiquant où exercer un effort de poussée pour larguer le hublot (10).

5. Hublot selon l'une quelconque des revendications 1 à 4,
**caractérisé en ce que**, en dehors d'une phase de largage, le deuxième tronçon (30) prolonge le premier tronçon (25) selon un sens allant d'un centre de gravité (CG) du hublot vers ledit pourtour (16).

6. Hublot selon l'une quelconque des revendications 1 à 5,
**caractérisé en ce que** ladite paroi périphérique (20) comporte uniquement un premier tronçon (25) et un deuxième tronçon (30).

7. Hublot selon l'une quelconque des revendications 1 à 6,
**caractérisé en ce que** ledit deuxième tronçon (30) comporte un coin du pourtour (16).

8. Hublot selon la revendication 7,
**caractérisé en ce que** ledit coin relie deux segments de pourtour (51, 52) appartenant au pourtour (16), la bande de liaison (85) s'étendant entre lesdits deux segments de pourtour (51, 52).

9. Hublot selon l'une quelconque des revendications 1 à 8,
**caractérisé en ce que** ledit hublot (10) présente un segment transversal (60) qui s'étend selon une longueur (61) du centre de gravité (CG) du hublot (10) jusqu'à un point extrémal (62) du deuxième tronçon (30), ledit point extrémale (62) du deuxième tronçon (30) étant le point du deuxième tronçon (30) le plus éloigné dudit centre de gravité (CG), ledit espace (40) étant situé à une distance (65) du point extrémal, ladite distance (65) étant comprise entre 6% et 30% de ladite longueur (61).

10. Hublot selon la revendication 9,
**caractérisé en ce que** ladite distance (65) est égale à 8% de ladite longueur (61).

11. Hublot selon la revendication 7,
caractérisé en ce ledit hublot (10) est sensiblement rectangulaire, ledit hublot présentant quatre segments (50) et quatre coins (55).

12. Hublot selon l'une quelconque des revendications 1 à 11,
**caractérisé en ce que** la bande de liaison (85) est collée à la première face interne (26) et à la deuxième face interne (31) par une bande de colle (400), la bande de colle (400) comportant successivement selon la ligne de séparation un premier tronçon d'extrémité (401) destiné à être inséré dans une gorge interne (78) du joint de largage (70) puis un tronçon central (402) puis un deuxième tronçon d'extrémité destiné à être inséré dans la gorge interne (78), le premier tronçon d'extrémité (401) présentant une première épaisseur (501) entre la bande de liaison (85) et le premier tronçon (25) et entre la bande de liaison (85) et le deuxième tronçon (30), le deuxième tronçon d'extrémité (401) présentant ladite première épaisseur (501) entre la bande de liaison (85) et le premier tronçon (25) et entre la bande de liaison (85) et le deuxième tronçon (30), le tronçon central (402) présentant une deuxième épaisseur (502) entre la bande de liaison (85) et le premier tronçon (25) et entre la bande de liaison (85) et le deuxième tronçon (30), la première épaisseur étant inférieure à la deuxième épaisseur.

13. Véhicule (1) muni d'un encadrement (2) autour d'une ouverture (3), ladite ouverture (3) étant disposée entre une cabine (4) et un milieu extérieur (5) situé à l'extérieur dudit véhicule (1), ledit véhicule (1) comprenant un hublot (10) pour obturer ladite ouverture (3), ledit véhicule (1) comprenant un joint de largage (70) à clé de largage, ledit joint de largage (70) comprenant un corps de joint (95), le corps de joint présentant une gorge interne (78) et une gorge externe (79), ladite paroi périphérique (20) étant engagée dans ladite gorge interne (78), ledit encadrement (2) étant engagé dans ladite gorge externe (79),
**caractérisé en ce que** ledit hublot (10) est selon l'une quelconque des revendications 1 à 12, le premier tronçon (25) et le deuxième tronçon (30) étant insérés dans ladite gorge interne (78).

14. Véhicule selon la revendication 13,
**caractérisé en ce que** ledit véhicule (1) comprend une poignée (80), ladite poignée (80) s'étendant d'une première extrémité (81) solidaire d'une première zone (66) d'une clé de largage jusqu'à une deuxième extrémité (82) solidaire d'une deuxième zone (67) de la clé de largage, ladite poignée (80) étant située au droit de ladite bande de liaison (85) pour masquer visuellement cette bande de liaison (85) aux yeux d'un individu présent dans la cabine (4).

15. Véhicule selon l'une quelconque des revendications 13 à 14,
**caractérisé en ce que** ledit premier tronçon (25) présentant une marque (90) indiquant où pousser pour larguer le hublot (10), ladite poignée (80) est située au droit de ladite marque (90) pour masquer visuellement ladite marque (90) aux yeux d'un individu présent dans la cabine (4).

16. Procédé de largage d'un hublot (10) dans un véhicule (1) selon l'une quelconque des revendications 13 à 15,
**caractérisé en ce que** ledit procédé comporte les étapes de :
- retrait d'une clé de largage (76) dudit joint de largage (70),
- application d'un effort sur le premier tronçon (25),
- déchirure ou élongation dudit film de colle (45) et rotation dudit deuxième tronçon (30) par rapport au premier tronçon (25),
- extraction du hublot (10) en dehors du véhicule (1).

## Patentansprüche

1. Abwerfbares Fahrzeugfenster (10), das mit einer Umfangswand (20) um den gesamten Umfang (16) des Fahrzeugfensters (10) herum versehen ist, wobei die Umfangswand (20) vorgesehen ist, um in eine Abwerfdichtung (70) eingesetzt zu werden,
**dadurch gekennzeichnet, dass** die Umfangswand (20) mindestens einen ersten Abschnitt (25) und einen zweiten Abschnitt (30) umfasst, die außerhalb einer Abwurfphase in Verlängerung voneinander angeordnet sind, wobei der erste Abschnitt (25) eine erste Flanke (28) aufweist, die außerhalb der Abwurfphase von einer zweiten Flanke (33) des zweiten Abschnitts (30) durch einen Zwischenraum (40) entlang einer Trennlinie (35) getrennt ist, wobei sich der erste Abschnitt (25) in der Dicke von einer ersten Innenfläche (26), die vorgesehen ist, um einer Kabine (4) eines Fahrzeugs (1) zugewandt zu sein, bis zu einer ersten Außenfläche (27) erstreckt, die vorgesehen ist, um einer Umgebung außerhalb des Fahrzeugs (1) zugewandt zu sein, und der zweite Abschnitt (30) sich in der Dicke von einer zweiten Innenseite (31), die vorgesehen ist, um der Kabine (4) zugewandt zu sein, zu einer zweiten Außenseite (32) erstreckt, die vorgesehen ist, um der Umgebung (5) zugewandt zu sein, wobei ein Klebstofffilm (45) in dem Zwischenraum (40) angeordnet ist, indem er an die erste Flanke (28) und an die zweite Flanke (33) geklebt ist,
wobei das Fahrzeugfenster (10) einen Verbindungsstreifen (85) aufweist, der an der ersten Innenfläche (26) und an der zweiten Innenfläche (31) befestigt ist und den Zwischenraum (40) überdeckt, um während der Abwurfphase eine Drehung des ersten Abschnitts (25) in Bezug auf den zweiten Abschnitt (30) durch Verformung des Klebstofffilms (45) zu ermöglichen.

2. Fahrzeugfenster nach Anspruch 1,
**dadurch gekennzeichnet, dass** die Umfangswand (20) für elektromagnetische Wellen mit einer Frequenz im Bereich der für den Menschen sichtbaren Frequenzen durchlässig ist.

3. Fahrzeugfenster nach einem der Ansprüche 1 bis 2,
**dadurch gekennzeichnet, dass** die besagte Trennlinie (35) eine gerade Linie ist.

4. Fahrzeugfenster nach einem der Ansprüche 1 bis 3,
**dadurch gekennzeichnet, dass** der erste Abschnitt (25) eine Markierung (90) aufweist, die angibt, wo eine Schubkraft zum Abwerfen des Fahrzeugfensters (10) anzuwenden ist.

5. Fahrzeugfenster nach einem der Ansprüche 1 bis 4,
**dadurch gekennzeichnet, dass** außerhalb einer Abwurfphase der zweite Abschnitt (30) den ersten Abschnitt (25) in einer Richtung von einem Schwerpunkt (CG) des Fahrzeugfensters zu dem Umfang (16) hin verlängert.

6. Fahrzeugfenster nach einem der Ansprüche 1 bis 5,
**dadurch gekennzeichnet, dass** die Umfangswand (20) nur einen ersten Abschnitt (25) und einen zweiten Abschnitt (30) umfasst.

7. Fahrzeugfenster nach einem der Ansprüche 1 bis 6,
**dadurch gekennzeichnet, dass** der zweite Abschnitt (30) eine Ecke (16) des Umfangs aufweist.

8. Fahrzeugfenster gemäß Anspruch 7,
**dadurch gekennzeichnet, dass** die Ecke zwei zum Umfang (16) gehörende Umfangssegmente (51, 52) verbindet, wobei sich der Verbindungsstreifen (85) zwischen den beiden Umfangssegmenten (51, 52) erstreckt.

9. Fahrzeugfenster nach einem der Ansprüche 1 bis 8,
**dadurch gekennzeichnet, dass** das Fahrzeugfenster (10) ein Quersegment (60) aufweist, das sich entlang einer Länge (61) vom Schwerpunkt (CG) des Fahrzeugfensters (10) zu einem Endpunkt (62) des zweiten Abschnitts (30) erstreckt, wobei der Endpunkt (62) des zweiten Abschnitts (30) der am weitesten vom Schwerpunkt (CG) entfernte Punkt des zweiten Abschnitts (30) ist, wobei der Zwischenraum (40) in einem Abstand (65) vom Endpunkt angeordnet ist, wobei der Abstand (65) zwischen 6% und 30% der Länge (61) beträgt.

10. Fahrzeugfenster nach Anspruch 9,
**dadurch gekennzeichnet, dass** der Abstand (65) gleich 8% der Länge (61) ist.

11. Fahrzeugfenster nach Anspruch 7,
**dadurch gekennzeichnet, dass** das Fahrzeugfenster (10) im Wesentlichen rechteckig ist, wobei das Fahrzeugfenster vier Segmente (50) und vier Ecken (55) aufweist.

12. Fahrzeugfenster nach einem der Ansprüche 1 bis 11,
**dadurch gekennzeichnet, dass** der Verbindungsstreifen (85) mit der ersten Innenfläche (26) und der zweiten Innenfläche (31) durch einen Klebstoffstreifen (400) verklebt ist, wobei der Klebstoffstreifen (400) entlang der Trennlinie nacheinander einen ersten Endabschnitt (401), der vorgesehen ist, in eine Innennut (78) der Abwerfdichtung (70) eingeführt zu werden, dann einen Mittelabschnitt (402) und dann einen zweiten Endabschnitt, der vorgesehen ist, in die Innennut (78) eingeführt zu werden, aufweist, wobei der erste Endabschnitt (401) eine erste Dicke (501) zwischen dem Verbindungsstreifen (85) und dem ersten Abschnitt (25) und zwischen dem Verbindungsstreifen (85) und dem zweiten Abschnitt (30) aufweist, und der zweite Endabschnitt (401) die erste Dicke (501) zwischen dem Verbindungsstreifen (85) und dem ersten Abschnitt (25) und zwischen dem Verbindungsstreifen (85) und dem zweiten Abschnitt (30) aufweist, wobei der Mittelabschnitt (402) eine zweite Dicke (502) zwischen dem Verbindungsstreifen (85) und dem ersten Abschnitt (25) und zwischen dem Verbindungsstreifen (85) und dem zweiten Abschnitt (30) aufweist, wobei die erste Dicke geringer als die zweite Dicke ist.

13. Fahrzeug (1), das mit einem Rahmen (2) um eine Öffnung (3) herum versehen ist, wobei die Öffnung (3) zwischen einer Kabine (4) und einer Umgebung (5) außerhalb des Fahrzeugs (1) angeordnet ist, wobei das Fahrzeug (1) ein Fahrzeugfenster (10) zum Verschließen der Öffnung (3) aufweist, wobei das Fahrzeug (1) eine Abwerfdichtung (70) mit einem Abwerfschlüssel aufweist, wobei die Abwerfdichtung (70) einen Dichtungskörper (95) umfasst, wobei der Dichtungskörper eine innere Nut (78) und eine äußere Nut (79) aufweist, wobei die Umfangswand (20) in die innere Nut (78) eingreift und der Rahmen (2) in die äußere Nut (79) eingreift,
**dadurch gekennzeichnet, dass** das Fahrzeugfenster (10) nach einem der Ansprüche 1 bis 12 ist, und dass der erste Abschnitt (25) und der zweite Abschnitt (30) in die innere Nut (78) eingesetzt sind.

14. Fahrzeug nach Anspruch 13,
**dadurch gekennzeichnet, dass** das Fahrzeug (1) einen Griff (80) aufweist, wobei sich der Griff (80) von einem ersten Ende (81), das fest mit einem ersten Bereich (66) eines Abwerfschlüssels verbunden ist, zu einem zweiten Ende (82), das fest mit einem zweiten Bereich (67) des Abwerfschlüssels verbunden ist, erstreckt, wobei der Griff (80) in der Verlängerung des Verbindungsstreifens (85) angeordnet ist, um diesen Verbindungsstreifen (85) visuell vor den Augen einer in der Kabine (4) anwesenden Person zu verbergen.

15. Fahrzeug nach einem der Ansprüche 13 bis 14,
**dadurch gekennzeichnet, dass** der erste Abschnitt (25) eine Markierung (90) aufweist, die anzeigt, wohin zu drücken ist, um das Fahrzeugfenster (10) abzuwerfen, wobei der Griff (80) an der Markierung (90) angeordnet ist, um die Markierung (90) visuell vor einer in der Kabine (4) anwesenden Person zu verbergen.

16. Verfahren zum Abwerfen eines Fahrzeugfensters (10) in einem Fahrzeug (1) nach einem der Ansprüche 13 bis 15,
**dadurch gekennzeichnet, dass** das Verfahren die Schritte umfasst:
- Entfernen eines Abwerfschlüssels (76) von der Abwerfdichtung (70),
- Anwenden einer Kraft auf den ersten Abschnitt (25),
- Reißen oder Dehnen des Klebstofffilms (45) und Drehen des zweiten Abschnitts (30) relativ zum ersten Abschnitt (25),
- Entfernen des Fahrzeugfensters (10) aus dem Fahrzeug (1).

## Claims

1. Releasable porthole (10) having a peripheral wall (20) on an entire circumference (16) of this porthole (10), said peripheral wall (20) being intended to be inserted into a release seal (70),
**characterised in that** said peripheral wall (20) comprises at least a first section (25) and a second section (30) which are located in the extension of each other outside a release phase, said first section (25) having a first flank (28) separated from a second flank (33) of the second section (30) by a space (40) along a separation line (35), said first section (25) extending in thickness from a first inner face (26) intended to face a cabin (4) of a vehicle (1) towards a first outer face (27) intended to face an external environment (5) located outside said vehicle (1), said second section (30) extending in thickness from a second internal face (31) intended to face said cabin (4) towards a second external face (32) intended to face said external environment (5), an adhesive film (45) being disposed in said space (40) by being glued to the first flank (28) and to the second flank (33), said porthole (10) comprising a connecting strip (85) fixed to the first internal face (26) and to the second internal face (31) covering said space (40) to allow rotation of the first section (25) with respect to the second section (30) during a said release phase by deforming said adhesive film (45).

2. Porthole according to claim 1,
**characterised in that** said peripheral wall (20) is transparent to electromagnetic waves having a frequency in the range of frequencies visible to humans.

3. Porthole according to any one of claims 1 to 2, **characterised in that** said separation line (35) is a straight line.

4. Porthole according to any one of claims 1 to 3, **characterised in that** said first section (25) has a mark (90) indicating where to exert a thrust force to release the porthole (10).

5. Porthole according to any one of claims 1 to 4, **characterised in that**, outside a release phase, the second section (30) extends the first section (25) in a direction going from a centre of gravity (CG) of the porthole towards said periphery (16).

6. Porthole according to any one of claims 1 to 5, **characterised in that** said peripheral wall (20) comprises only a first section (25) and a second section (30).

7. Porthole according to any one of claims 1 to 6, **characterised in that** said second section (30) has a corner of said periphery (16).

8. Porthole according to claim 7, **characterised in that** said corner connects two peripheral segments (51, 52) belonging to the periphery (16), the connecting strip (85) extending between said two peripheral segments (51, 52).

9. Porthole according to any one of claims 1 to 8,
**characterised in that** said porthole (10) has a transverse section (60) which extends along a length (61) from the centre of gravity (CG) of the porthole (10) to an end point (62) of the second section (30), said end point (62) of the second section (30) being the point of the second section (30) furthest from said centre of gravity (CG), said space (40) being located at a distance (65) from the end point, said distance (65) being between 6% and 30% of said length (61).

10. Porthole according to claim 9, **characterised in that** said distance (65) is equal to 8% of said length (61).

11. Porthole according to claim 7,
**characterised in that** said porthole (10) is substantially rectangular, said porthole having four segments (50) and four corners (55).

12. Porthole according to any one of claims 1 to 11,
**characterised in that** the connecting strip (85) is affixed to the first inner side (26) and to the second inner side (31) by an adhesive strip (400), the adhesive strip (400) successively comprising along the separating line a first end section (401) intended to be inserted into an internal groove (78) of the release seal (70), then a central section (402), then a second end section intended to be inserted into the internal groove (78), the first end section (401) having a first thickness (501) between the connecting strip (85) and the first section (25) and between the connecting strip (85) and the second section (30), the second end section (401) having said first thickness (501) between the connecting strip (85) and the first section (25) and between the connecting strip (85) and the second section (30), the central section (402) having a second thickness (502) between the connecting strip (85) and the first section (25) and between the connecting strip (85) and the second section (30), the first thickness being less than the second thickness.

13. Vehicle (1) fitted with a frame (2) around an opening (3), said opening (3) being arranged between a cabin (4) and an external environment (5) located outside said vehicle (1), said vehicle (1) comprising a porthole (10) for closing said opening (3), said vehicle (1) comprising a release seal (70) with a release key, said release seal (70) comprising a seal body (95), the seal body having an inner groove (78) and an outer groove (79), said peripheral wall (20) being engaged in said inner groove (78), said frame (2) being engaged in said outer groove (79),
**characterised in that** said porthole (10) is according to any one of claims 1 to 12, the first section (25) and the second section (30) being inserted in said internal groove (78).

14. Vehicle according to claim 13,
**characterised in that** said vehicle (1) comprises a handle (80), said handle (80) extending from a first end (81) integral with a first zone (66) of a release key to a second end (82) integral with a second zone (67) of the release key, said handle (80) being located at said connecting strip (85) for visually concealing said connecting strip (85) from an individual present in the cabin (4).

15. Vehicle according to any one of claims 13 to 14,
**characterised in that** said first section (25) has a mark (90) indicating where to push to release the porthole (10), said handle (80) is located at said mark (90) for visually concealing said mark (90) from an individual present in the cab (4).

16. Method for releasing a porthole (10) in a vehicle (1) according to any one of claims 13 to 15,
**characterised in that** said method comprises the steps of:
- removal of a release key (76) from said release seal (70);
- application of a force to the first section (25);
- tearing or elongation of said adhesive film (45) and rotation of said second section (30) with respect to the first section (25);
- removal of the porthole (10) from the vehicle (1).
